Europäisches Patentamt

European Patent Office

Office européen des brevets

(11) Veröffentlichungsnummer: **0 379 909**
**A2**

(12) ## EUROPÄISCHE PATENTANMELDUNG

(21) Anmeldenummer: **90100639.5**

(22) Anmeldetag: **12.01.90**

(51) Int. Cl.⁵: **B60P 1/38**

(30) Priorität: **23.01.89 DE 3901895**

(43) Veröffentlichungstag der Anmeldung:
**01.08.90 Patentblatt 90/31**

(84) Benannte Vertragsstaaten:
**AT BE CH DE DK ES FR GB GR IT LI LU NL SE**

(71) Anmelder: **Paul Klöckner GmbH**
**Hirtscheider Strasse 13 Postfach 90**
**D-5239 Nistertal(DE)**

(72) Erfinder: **Klöckner, Alfred**
**Hirtscheider Strasse 13**
**D-5239 Nistertal(DE)**

(74) Vertreter: **Patentanwälte Grünecker,**
**Kinkeldey, Stockmair & Partner**
**Maximilianstrasse 58**
**D-8000 München 22(DE)**

(54) **Nutzfahrzeug mit reversierbarem Ladeboden.**

(57) Die Erfindung betrifft ein Nutzfahrzeug mit einem Frachtraumbehälter, der einen reversierbaren Ladeboden aufweist, der durch einen über Rollen geführten, endlosen Ladegurt gebildet ist. Durch die Erfindung wird eine konstruktive Lösung für ein derartiges Fahrzeug mit einer größtmöglichen Ladebodenbreite geschaffen. Diese Lösung ist dadurch gekennzeichnet, daß die Längsseitenwände des Frachtraumbehälters über die Länge des Frachtraumbehälters verlaufende Längsträger aufweisen, daß der Ladeboden mehrere in Längsrichtung des Frachtraumbehälters hintereinander angeordnete Rollengerüste für die Halterung und Lagerung der Rollen aufweist, die jeweils unter Bildung von Querversteifungen für einen weitgehend selbsttragenden Frachtraumbehälter mit den Längsträgern verbunden sind, und daß jeweils in einem vorderen und in einem hinteren Bereich des Frachtraumbehälters eine die Längsträger verbindende Querträgerbrücke zum Abtragen der Lasten der Längsträger jeweils auf Teile des Fahrgestells des Nutzfahrzeuges vorgesehen ist.

FIG.1

## Nutzfahrzeug mit reversierbarem Ladeboden

Die Erfindung betrifft ein Nutzfahrzeug mit einem Frachtraumbehälter, der einen reversierbaren Ladeboden aufweist, der durch einen in Längsrichtung des Frachtraumbehälters beweglichen, über Rollen geführten, endlosen Ladegurt gebildet ist, wobei wenigstens ein innerhalb einer der den Ladegurt an den Enden des Ladebodens umlenkenden Trommeln angeordneter Antriebsmotor für den Antrieb des Ladegurts vorgesehen ist.

Ein solches Nutzfahrzeug mti einem endlosen Ladegurt ist aus der US-Patentschrift 3, 247,983 bekannt.

Bei der Konstruktion eines Nutzfahrzeugs mit einem beweglichen Ladeboden, der durch einen endlosen Ladegurt gebildet ist, besteht das Problem, die Bodenkonstruktion so auszulegen, daß bei gesetzlich vorgeschriebener Gesamtbreite der Fahrzeuge eine möglichst große Breite des beweglichen Ladebodens erzielt wird. In dieser Beziehung können die bekannten konstruktiven Lösungen für Fahrzeuge mit einem reversierbaren Ladeboden noch nicht befriedigen.

Es ist die Aufgabe der Erfindung, eine konstruktive Lösung für ein Nutzfahrzeug der eingangs erwähnten Art vorzuschlagen, bei dem die Differenz zwischen der gesetzlich vorgeschriebenen Gesamtbreite des Fahrzeugs und der Breite des beweglichen Ladebodens minimal ist.

Erfindungsgemäß wird diese Aufgabe dadurch gelöst, daß die Längsseitenwände des Frachtraumbehälters an ihrem unteren Ende über die Länge des Frachtraumbehälters verlaufende Längsträger aufweisen, daß der Ladeboden mehrere in Längsrichtung des Frachraumbehälters hintereinander angeordnete Rollengrüste für die Halterung und Lagerung der Rollen aufweist, die jeweils unter Bildung von Querversteifungen für einen weitgehend selbsttragenden Frachtraumbehälter mit den Längsträgern verbunden sind, und daß jeweils in einem vorderen und in einem hinteren Bereich des Frachtraumbehälters eine die Längsträger verbindende Querträgerbrücke zum Abtragen der Lasten der Längsträger jeweils auf Teile des Fahrgestells des Nutzfahrzeugs vorgesehen ist.

Durch diese erfindungsgemäße Lösung, bei der auf einen den Frachtraumbehälter tragenden, durchgehenden Fahrzeugrahmen verzichtet werden kann, wird bei einem bevorzugten Ausführungsbeispiel für die Erfindung erreicht, daß bei einer Gesamtfahrzeugbreite von 2,50 m die Ladebreite des Ladebodens 2,44 m beträgt.

In vorteilhafter Ausgestaltung der Erfindung werden die die Seitenwände am unteren Rand verstärkenden Längsträger profilförmig, vorzugsweise L-förmig ausgebildet, und die Längsseitenwände bestehen aus ineinander einsteck- und/oder einrastbaren Wandelementen, die als Verbundplatten ausgebildet sein können. Die Wandelemente sind vorzugsweise mit einem Steg des Längsträgers verschweißt, was zu stabilen, zur Übertragung der Auflagekräfte von Lasten geeigneten Seitenwänden führt. Die Längsträger weisen vorteilhaft einen vorstehenden Schenkel auf, gegen den die Wandelemente mit ihrem unteren Rand zur Anlage kommen.

Für die Rollengerüste sind zweckmäßig seitliche, in Längsrichtung zum Frachtraumbehälter verlaufende Rollenachsenträger vorgesehen, die mit den L-förmigen Längsträgern des Frachtraumbehälters nahe dem unteren Rand verbunden, insbesondere verschraubt sind. Die Rollenachsenträger sind durch Rollenachsen, auf denen jeweils mehrere, vorzugsweise fünf, Rollen angeordnet sind, miteinander verbunden. Starre Verbindungen zwischen den Rollenachsenträgern sind durch Querstreben hergestellt, die dem Rollengerüst eine große Stabilität verleihen. Zur Festigkeit tragen weiterhin Trägerstege bei, die in Längsrichtung des Frachtraumbehälters verlaufen und mit den Querträgern verbunden sind, so daß ein rasterartiger Aufbau der Rollengerüste vorliegt, durch den eine hohe Stabilität des selbsttragenden Frachtraumbehälters gewährleistet ist.

Jeweils am Ende des Ladebodens sind an den Enden der Rollenachsenträger Halterungselemente, vorzugsweise Halterungsplatten, für die Lagerung der den endlosen Ladegurt umlenkenden Trommeln vorgesehen. Diese Halterungselemente können zusätzlich zur Halterung von Einschnürtrommeln vorgesehen sein, durch die dem Ladegurt u.a. die für den Antrieb über eine Trommel erforderliche Spannung verliehen wird.

Ein bevorzugtes Ausführungsbeispiel für ein als Sattelauflieger ausgebildetes, erfindungsgemäßes Nutzfahrzeug weist drei hintereinander angeordnete Rollengerüste auf und es sind drei Radachsen vorgesehen.

Weitere vorteilhafte Ausgestaltungsmöglichkeiten der Erfindung gehen aus den Unteransprüchen hervor.

Die Erfindung soll nun anhand eines Ausführungsbeispiels und der beiliegenden Zeichnungen weiter erläutert und beschrieben werden. Es zeigen

Fig.1 ein Ausführungsbeispiel für ein erfindungsgemäßes Nutzfahrzeug in Seitenansicht,

Fig.2 ein Rollengerüst eines erfindungsgemäßen Nutzfahrzeuges in der Draufsicht,

Fig.3 ein Rollengerüst des erfindungsgemäßen Nutzfahrzeuges in der Seitenansicht,

Fig.4 eine Halterungsplatte für die Lagerung bzw. Halterung einer Umlenktrommel bzw. Einschnürtrommel in Seitenansicht,

Fig.5 die Halterungsplatte mit der gehalterten Einschnürtrommel und der gelagerten Umlenktrommel gemäß der Fig. 4 in der Draufsicht, und

Fig.6 eine Querträgerbrücke gemäß dem Ausführungsbeispiel für ein erfindungsgemäßes Nutzfahrzeug von Fig. 1.

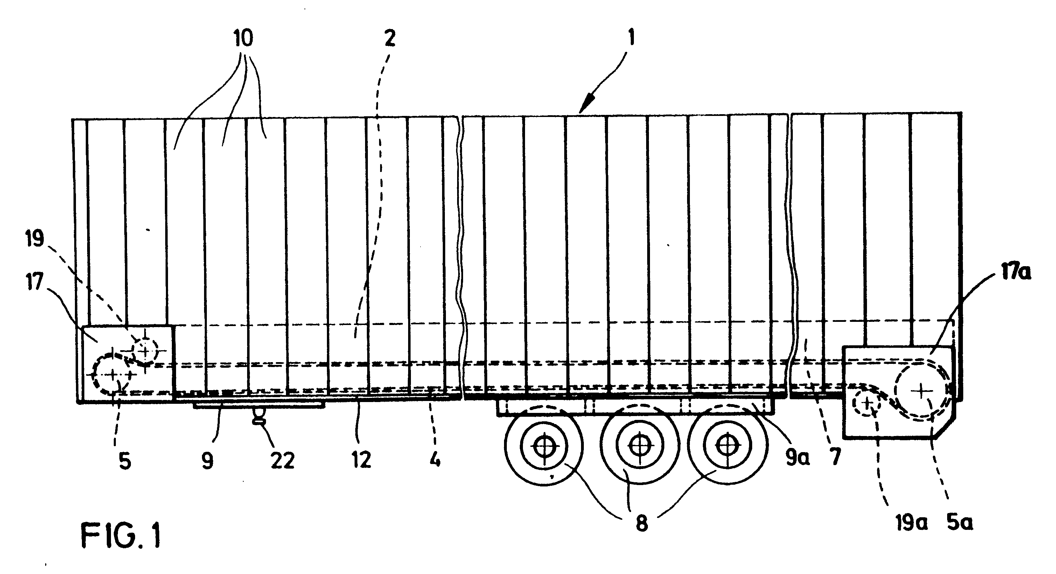

In Fig. 1 ist mit 1 ein Frachtraumbehälter bezeichnet, dessen Seitenwände im wesentlichen aus Wandelementen 10 zusammengesetzt sind. Die einander gegenüberliegenden Randflächen der Wandelemente sind z.B. gespundet, so daß die Wandelemente ineinandergesteckt werden können. Die Randflächen sind derart gespundet, daß die Wandelemente beim Zusammenstecken einrasten und nach dem Einrasten nicht mehr voneinander getrennt werden können. Mit 4 ist ein endloser Ladegurt bezeichnet, der um die Umlenktrommeln 5 und 5a geführt ist. Der Ladegurt besteht im vorliegenden Ausführungsbeispiel aus einem durch Stahlseile verstärkten, gummiummantelten Transportband. Ein solcher Gurt weist bei großer Flexibilität gute Festigkeitseigenschaften auf, und ist insbesondere nur in sehr geringem Maße dehnbar. Der Ladegurt 4 wird durch zwei Einschnürtrommeln 19 und 19a geführt und gespannt. Die Umlenktrommeln 5, 5a und die Einschnürtrommeln 19, 19a sind durch die Halterungsplatten 17 bzw. 17a gehaltert. Die Halterungsplatten 17 und 17a sind jeweils mit einem zwischen dem hin- und rücklaufenden Ladegurt angeordneten Rollengerüst verbunden, das in Figur 1 nicht dargestellt ist. Diese Rollengerüste sind beiderseits über einen Längsträger 7 mit den Seitenwänden des Frachtraumbehälters verbunden, wobei der Längsträger die Seitenwand des Frachtraumbehälters am unteren Rand verstärkt und mit den Wandelementen 2, im vorliegenden Ausführungsbeispiel, verschweißt oder auf andere Weise unlösbar verbunden ist. Mit 9 ist eine die zu beiden Seiten des Nutzfahrezugs angeordneten Längsträgers 7 verbindende Querträgerbrücke bezeichnet, die im Auflagebereich des als Sattelauflieger ausgebildeten Nutzfahrzeugs angeordnet ist, und den Zapfen 22 zum Einhängen des Sattelaufliegers in den Sattel trägt.

Eine weitere die Längsträger verbindende Querträgerbrücke 9a ist über den Rädern 8 des im vorliegenden Ausführungsbeispiel dreiachsigen Sattelaufliegers angeordnet. An der Querträgerbrücke 9a sind die Räder 8 bzw. deren Achsen aufgehängt, und die Räder bzw. Achsen sind gegen diese Querträgerbrücke abgefedert.

Die Wandelemente 10 könnten an ihrem oberen Rand mit einem weiteren Längsträger, der der Seitenwand zusätzliche Stabilität verleiht, verbunden sein.

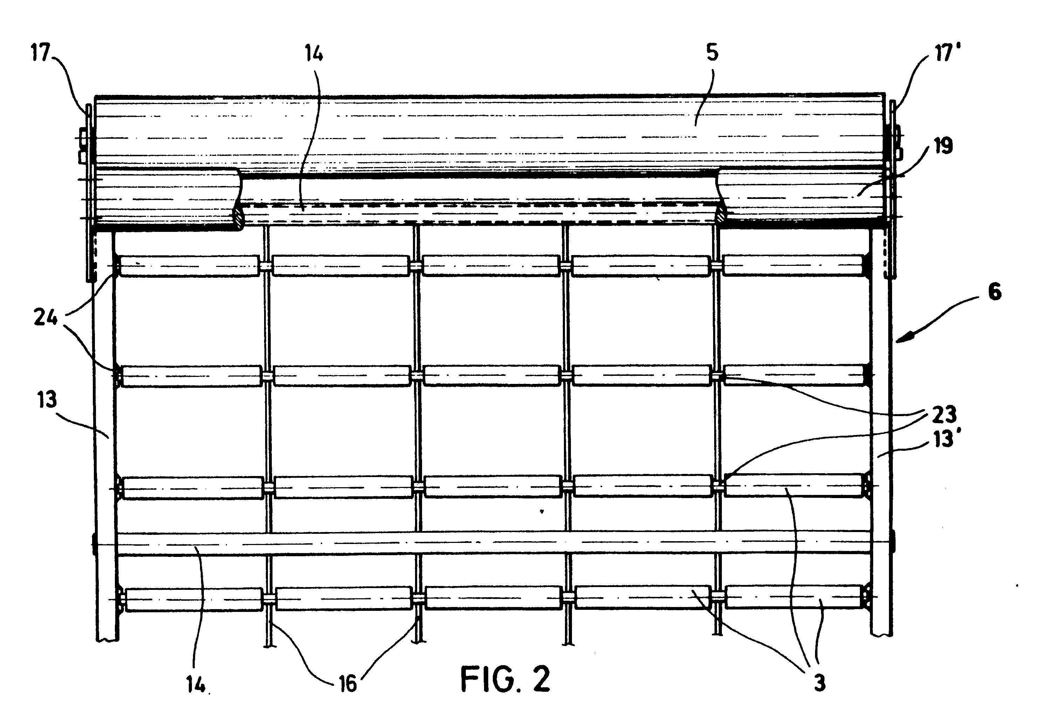

In Fig. 2 sind mit 3 auf Rollenachsen 23 angeordnete Rollen bezeichnet, über die der Ladegurt 4 geführt ist. Die Lagerung der Rollenachsen 23 erfolgt durch Laschen 24, auf denen die Rollenachsenden aufliegen, wobei die Laschen 24 mit den Rollenachsenlängsträgern 13 und 13' verbunden, vorzugsweise verschweißt, sind. Mit 14 und 14' sind die Rollenachsenlängsträger 13 und 13' verbindende Querstreben bezeichnet. Diese Querstreben sind ihrerseits mit Längsstegen 16 verbunden, auf denen die Rollenachsen jeweils im Bereich zwischen zwei Rollen gelagert sind. Durch das von Querstreben und Längsstegen gebildete Raster wird dem Rollengerüst eine hohe Stabilität verliehen.

Das in der Fig. 2 gezeigte Rollengerüst befindet sich am vorderen Ende des Sattelaufliegers. An den Rollenachsenlängsträgern 13 und 13' sind jeweils Halterungsplatten 17 und 17' befestigt, die zur Halterung der Umlenktrommel 5 bzw. der Einschnürtrommel 19 dienen.

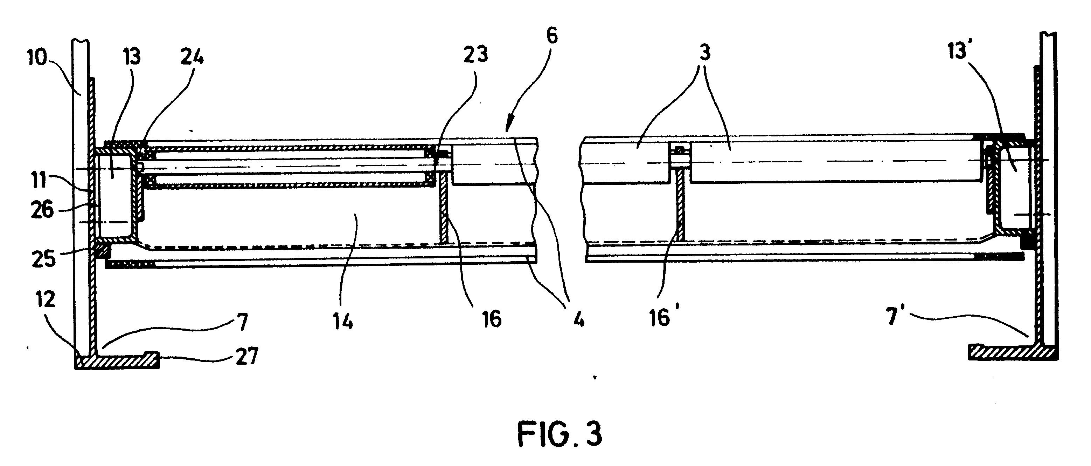

Der Fig. 3, die das Rollengerüst von Fig. 2 in seitlicher Darstellung zeigt, kann entnommen werden, daß die Rollenachsenlängsträger 13 und 13' als U-Profile ausgebildet sind, die mit dem Rollenachsenlager 24 verbunden sind. In die U-Profile 13 bzw. 13' sind jeweils Abdeckungen 26 eingeschweißt, über die jeweils eine Schraubverbindung mit der Längsseitenwand des Sattelaufliegers, die in diesem Bereich durch einen Steg 11 bzw. 11' des Längsträgers 7 bzw. 7' und die Wandelemente 10 gebildet wird, hergestellt ist. Die Längsträger 7, 7' weisen jeweils einen vorstehenden Schenkel 12 auf, gegen den die Wandelemente 10 mit ihrem unteren Rand zur Anlage kommen.

Das Rollengerüst 6 ist zusätzlich durch mit dem Steg 11 des Längsträgers 7 verbundene, vorzugsweise verschweißte, Auflagestege 25 abgestützt. Wie der Fig. 3 weiterhin entnommen werden kann, sind die Querstreben 14 als Hohlprofile ausgebildet, die mit den Längsstegen 16 bzw. 16' verschweißt sind. Der Ladegurt 4 liegt jeweils beidseitig auf dem nach oben gewandten Flansch des U-Profils 13 bzw. 13' gleitend auf, so daß der Ladeboden nach unten geschützt ist. Der Ladegurt steht annähernd bis an die Stege 11, 11' der Längsträger vor, so daß der Ladeboden nahezu über seine gesamte Breite beweglich ist.

Der rückgeführte Teil des Ladegurts unterhalb des Rollengerüsts 6 kann ebenfalls auf Rollen aufliegen (oder auch gleitend abgetragen werden), die mit Hilfe der Längsträger 7, 7' gelagert und zweckmäßig oberhalb der jeweils nach innen vorstehenden Flansche 27 der L-förmigen Längsträger 7, 7' angeordnet sind.

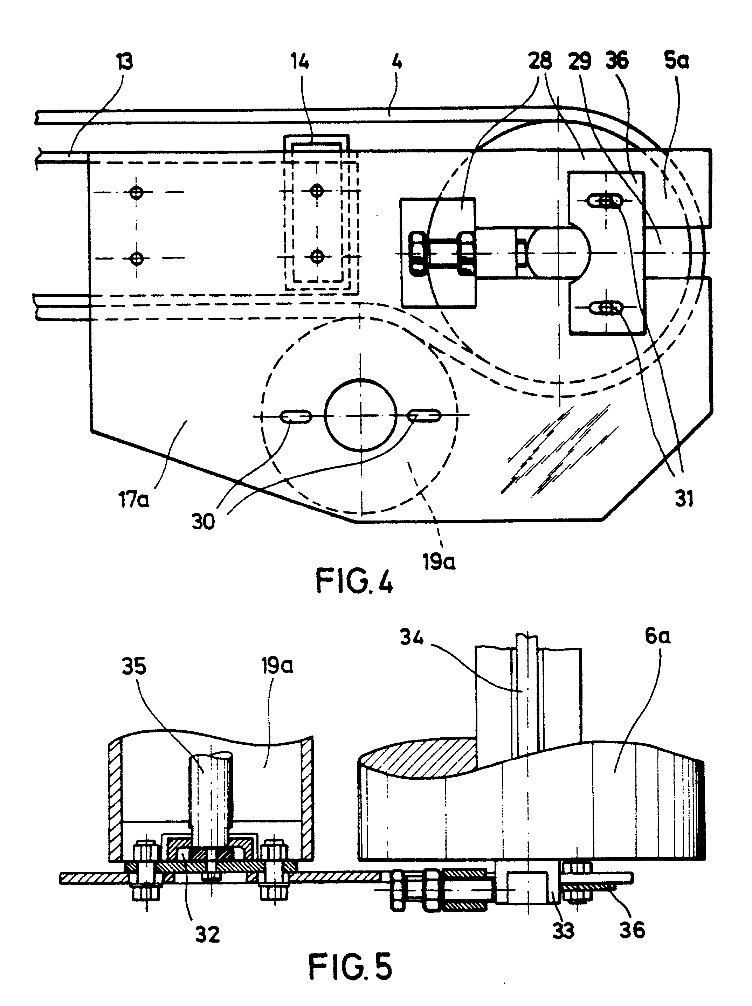

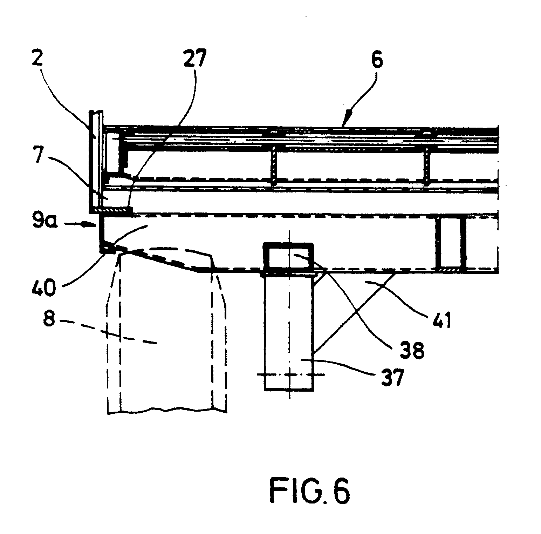

In den Fig. 4 und 5, in denen die Halterungsplatte 17a gemäß der Fig. 1 detailliert dargestellt ist, bezeichnet 29 eine Einschlitzung, in die die Achse der Antriebstrommel 5a geführt werden kann. Mit 28 ist eine Schraub-Klemmvorrichtung bezeichnet, mit deren Hilfe ein Zapfen 33 für die Achse 34 der Antriebstrommel 5a eingeklemmt werden kann. Der plattenförmige Gegenhalter 36 der Klemmvorrichtung 28 weist Langlöcher 31 auf und ist durch Schraubverbindungen an der Halterungsplatte 17a befestigt. Die Langlöcher 31 und die Einschlitzung 29 dienen u.a. zum Verstellen der Trommel, um eine Achsenparallelität zwischen Einschnür- und Antriebstrommel zu erreichen, wobei der Gegenhalter 36 zur lagegenauen Fixierung der Antriebstrommel dient.

Mit 32 ist eine in die Stirnseiten der Einschnürtrommel 19a hinein vorstehende Konsole für die jeweils in Höhe des Rollenmantels endende Achse 35 der Einschnürtrommel 19a bezeichnet. Diese auf der Achse verschiebbare Konsole ist durch Schraubverbindungen an der Halterungsplatte 17a befestigt, wobei für die Befestigung Langlöcher 30 in der Halterungsplatte vorgesehen sind. Mit 13 ist der Rollenachsenlängsträger des Rollengerüsts mit der Querstrebe 14 bezeichnet, an dem die Halterungsplatte 17a befestigt ist.

Aus der Fig. 6 ist zu entnehmen, daß der Flansch 27 des Längsträgers 7 auf Querträgern 40 der Querträgerbrücke 9a über den Rädern 8 zur Auflage kommt. Im vorliegenden Ausführungsbeispiel für einen dreiachsigen Sattelauflieger sind für die Querträgerbrücke 9a vier Querträger 40 vorgesehen. Wie der Fig. 6 weiterhin entnommen werden kann, weist die Querträgerbrücke 9a einen Längsträger 38 auf, wobei die Längsträger mit den Querträgern vorzugsweise verschweißt sind. Unter dem Längsträger 38 kommen jeweils Teile 37 der Radaufhängung zur Anlage, die durch Schrägstützen 41 zusätzlich gehaltert sind.

Bei dem vorliegenden Ausführungsbeispiel für einen Sattelauflieger sind eine oder mehrere, vorzugsweise drei, hintereinander angeordnete Rollengerüste vorgesehen. Beim Aufbau des Frachtraumbehälters, werden die Wandelemente mit den Längsträgern verschweißt. Die Rollengerüste, werden vorerst übereinandergestapelt, in das endlose Förderband seitlich eingeführt und von oben zwischen den Längsseitenwänden des Frachtraumbehälters herabgelassen. Die Rollengerüste werden dann in einer Ebene hintereinanderliegend angeordnet und mit den Längsseitenwänden verschraubt. Dann werden die Umlenktrommeln seitlich durch den Ladegurt gesteckt und mit Hilfe der danach zu montierenden Halterungsplatten befestigt. Zum Schluß können die Einschnürtrommeln montiert werden.

Die Konsolen für die Achsen der Einschnürtrommeln stehen in die Stirnseiten der Einschnürtrommeln hinein vor, so daß die Einschnürtrommeln zusammen mit den Konsolen zwischen die bereits befestigten Halterungsplatten geschoben werden können. Da für die Befestigung der Konsole Langlöcher vorgesehen sind, kann vor der Befestigung eine Justierung der Einschnürtrommeln erfolgen. Durch die auf der Halterungsplatte vorgesehenen Klemmvorrichtungen ist es außerdem möglich, auch die Umlenktrommeln zu justieren, so daß Achsenparallelität erreicht werden kann.

Neben dem Spannen des Gurtes kann durch die Einschnürtrommel erreicht werden, daß der Abstand zwischen dem oberen und unteren Teil des Ladegurtes gering ist, und der bewegliche Ladeboden dadurch eine geringe Einbauhöhe aufweist. Durch das Einschnüren wird der Winkel, über den der Ladegurt die Antriebstrommel umschlingt, vorteilhaft erhöht. Schließlich dient die Einschnürtrommel auch zum Lenken des Ladegurtes.

Die Trommel, die der Antriebstrommel gegenüberliegt, ist als Spanntrommel anzusehen und wird mittels der Klemmvorrichtung in der Einschlitzung so weit vorgeschoben, daß dadurch ein Spannen des Gurtes erreicht wird. Beide Trommeln sind ballig ausgeführt, was zu einem besseren Geradlauf des Gurtes führt.

Durch die seitlichen Längsträger und die miteinander verbundenen mit den Längsträgern verschweißten Wandelemente, sowie durch die die Seitenwände miteinander verbindenden rasterartig ausgebildeten Rollengerüste wird erreicht, daß der Frachtraumbehälter einen selbsttragenden Wagenkörper bildet, und kein durchgehender Fahrgestellrahmen für das Nutzfahrzeug erforderlich ist. Nur im Auflagebereich auf dem Sattel und über den Rädern sind zur Abtragung der Auflagekräfte Querträgerbrücken erforderlich.

## Ansprüche

1. Nutzfahrzeug mit einem Frachtraumbehälter (1), der einen reversierbaren Ladeboden (2) aufweist, der durch einen in Längsrichtung des Frachtraumbehälters (1) beweglichen, über Rollen (3) geführten, endlosen Ladegurt (4) gebildet ist, wobei wenigstens ein innerhalb einer der den Ladegurt (4) an den Enden des Ladebodens (2) umlenkenden Trommeln (5, 5a) angeordneter Antriebsmotor für den Antrieb des Ladegurts vorgesehen ist, **dadurch gekennzeichnet,** daß die Längsseitenwände des Frachtraumbehälters an ihrem unteren Ende über die Länge des Frachtraumbehälters verlaufende Längsträger (7) aufweisen, daß der Ladeboden (2) mehrere in Längsrichtung des Frachtraumbehälters (1) hintereinander angeordnete Rollengerüste (6) für die Halterung und Lagerung der Rollen (3) aufweist, die jeweils unter Bildung von Querversteifungen für einen weitgehend selbsttragenden Frachtraumbehälter (1) mit den Längsträgern (7) verbunden sind, und daß jeweils in einem vorderen und in einem hinteren Bereich des Fracht-traumbehälters eine die Längsträger (7) verbindende Querträgerbrücke (9, 9a) zum Abtragen der Lasten der Längsträger (7) jeweils auf Teile des Fahrgestells des Nutzfahrzeuges vorgesehen ist.

2. Nutzfahrzeug nach Anspruch 1, **dadurch gekennzeichnet,** daß der die Seitenwände am unteren Rand verstärkende Längsträger (7) profilförmig, vorzugsweise L-förmig, ausgebildet ist.

3. Nutzfahrzeug nach Anspruch 1 oder 2, **da-durch gekennzeichnet,** daß die Längsseitenwän-de des Frachtraumbehälters als Profilplanken, vorzugsweise Aluminiumklemmprofile oder als Platten, vorzugsweise aus mehreren Schichten bestehende Verbundplatten, ausgebildete Wandelemente (10) aufweisen.

4. Nutzfahrzeug nach einem der Ansprüche 1 bis 3 **dadurch gekennzeichnet,** daß die Längsseitenwände ineinander einsteck- und/oder einrastbare Wandelemente (10) aufweisen.

5. Nutzfahrzeug nach einem der Ansprüche 2 bis 4 **dadurch gekennzeichnet,** daß die Längsträger (7) einen vorstehenden Schenkel (12) aufweisen, gegen den die Wandelemente (10) mit ihrem unteren Rand zur Anlage kommen.

6. Nutzfahrzeug nach einem der Ansprüche 2 bis 5, **dadurch gekennzeichnet,** daß die Wandelemente (10) mit einem Steg (11) des Längsträgers (7) lösbar oder unlösbar, vorzugsweise durch eine Schweißverbindung, verbunden sind.

7. Nutzfahrzeug nach einem der Ansprüche 1 bis 6, **dadurch gekennzeichnet,** daß die Rollengerüste (6) seitliche, in Längsrichtung zum Fracht-traumbehälter (1) verlaufende Rollenachsenträger (13) aufweisen.

8. Nutzfahrzeug nach Anspruch 7, **dadurch gekennzeichnet,** daß die Rollenachsenträger (13) mit den Seitenwänden des Frachtraumbehälters über die Längsträger (7) verschraubt sind.

9. Nutzfahrzeug nach Anspruch 7 oder 8, **da-durch gekennzeichnet,** daß die Rollenachsenträ-ger (13) als Profile, vorzugsweise U-Profile, ausgebildet sind.

10. Nutzfahrzeug nach einem der Ansprüche 7 bis 9, **dadurch gekennzeichnet,** daß die Rollenachsenträger (13) eines Rollengerüsts (6) durch Querstreben (14) miteinander verbunden sind.

11. Nutzfahrzeug nach einem der Ansprüche 7 bis 10, **dadurch gekennzeichnet,** daß die Rollenachsen (23) auf an den Rollenachsenträgern (13) angeschweißten Laschen (24) aufliegen.

12. Nutzfahrzeug nach Anspruch 11, **dadurch gekennzeichnet,** daß auf einer Rollenachse (23) eine oder mehrere, vorzugsweise fünf, Rollen angeordnet sind.

13. Nutzfahrzeug nach Anspruch 11 oder 12, **dadurch gekennzeichnet,** daß ein Rollengerüst (6) je nach Belastung mehrere Rollenachsen (23) aufweist.

14. Nutzfahrzeug nach einem der Ansprüche 11 bis 13, **dadurch gekennzeichnet,** daß die Rollenachsen zwischen den Rollen auf in Längsrich-tung des Frachtraumbehälters verlaufenden Träger-stegen (16) gelagert sind.

15. Nutzfahrzeug nach Anspruch 14, **dadurch gekennzeichnet,** daß die Trägerstege (16) mit den Querstreben (14) verbunden sind.

16. Nutzfahrzeug nach einem der Ansprüche 7 bis 15, **dadurch gekennzeichnet,** daß jeweils am Ende des Ladebodens (2) an den Enden der Rollenachsenträger (13) Halterungselemente (17, 17a) für die Halterung der den endlosen Ladegurt (4) umlenkenden Trommeln (5, 5a) vorgesehen sind.

17. Nutzfahrzeug nach Anspruch 16, **dadurch gekennzeichnet,** daß die Halterungselemente (17, 17a) als Halterungsplatten ausgebildet sind.

18. Nutzfahrzeug nach Anspruch 17, **dadurch gekennzeichnet,** daß in den Halterungsplatten Einschlitzungen, in denen die Zapfen der Trommeln zur Justierung der Trommeln verschiebbar gelagert sind, vorgesehen sind.

19. Nutzfahrzeug nach einem der Ansprüche 1 bis 18, **dadurch gekennzeichnet,** daß für den Ladegurt wenigstens eine zusätzliche Einschnürtrommel (19, 19a) vorgesehen ist.

20. Nutzfahrzeug nach Anspruch 19, **dadurch gekennzeichnet,** daß die Einschnürtrommel (19, 19a) jeweils durch die Halterungsplatten (17, 17a) gehaltert ist.

21. Nutzfahrzeug nach Anspruch 19, **dadurch gekennzeichnet,** daß die Achse der Einschnürtrommel (19, 19a) an beiden Trommelenden jeweils in Höhe des Trommelmantels endet und durch an den beiden Stirnseiten in die Einschnürtrommel hineinstehende, axial verschiebbare und an den Halterungsplatten (17, 17a) befestigbare Konsolen (32) gelagert ist.

22. Nutzfahrzeug nach Anspruch 21, **dadurch gekennzeichnet,** daß zur Justierung der Einschnürtrommel (19, 19a) auf der Halterungsplatte für die Befestigung der Konsolen (32) Langlöcher (30) vorgesehen sind.

23. Nutzfahrzeug nach einem der Ansprüche 1 bis 22, **dadurch gekennzeichnet,** daß die Umlenktrommeln (5, 5a) und/oder die Einschnürtrommeln (19, 19a) ballig ausgebildet sind.

24. Nutzfahrzeug nach einem der Ansprüche 1 bis 23, **dadurch gekennzeichnet,** daß der Ladegurt (4) aus einem Transportband besteht, das Einlagen mit geringer Dehnbarkeit, vorzugsweise Stahlseileinlagen, als Zugträger aufweist.

25. Nutzfahrzeug nach einem der Ansprüche 1 bis 24, **dadurch gekennzeichnet,** daß der Ladegurt (4) jeweils am Rand auf den Rollenachsenträgern (13) aufliegt und bis nahe an die Längsträger (7) vorsteht.

26. Nutzfahrzeug nach einem der Ansprüche 1 bis 25, **dadurch gekennzeichnet,** daß ein Rollengerüst oder mehrere, vorzugsweise drei, Rollengerüste (6) vorgesehen sind.

27. Nutzfahrzeug nach einem der Ansprüche 1 bis 26, **dadurch gekennzeichnet,** daß das Nutzfahrzeug als ein Sattelauflieger mit einer einen Zapfen (22) aufweisenden vorderen Querträgerbrücke (9) ausgebildet ist.

28. Nutzfahrzeug nach einem der Ansprüche 1 bis 27, **dadurch gekennzeichnet,** daß für das Nutzfahrzeug zwei oder mehrere, vorzugsweise drei, Radachsen vorgesehen sind.

29. Nutzfahrzeug nach einem der Ansprüche 1 bis 28, **dadurch gekennzeichnet,** daß eine Querträgerbrücke (9a) über den Rädern vorgesehen ist, die wenigstens vier die Längsträger (7) verbindende Querträger (40) aufweist.

FIG.1

FIG. 2

FIG. 3

EP 0 379 909 A2

FIG.4

FIG.5

FIG.6